# EUROPEAN PATENT SPECIFICATION

(11) **EP 4 498 017 B1**
(45) Date of publication and mention of the grant of the patent: **05.11.2025**
(21) Application number: 24175181.7
(22) Date of filing: 10.05.2024
(51) Int. Cl.: F24S 20/00, F24S 20/70, F24S 25/70, F24S 30/20, H02S 20/00, H02S 20/30

(54) **WATER SURFACE PHOTOVOLTAIC DEVICE AND USE METHOD THEREOF**
PHOTOVOLTAIKVORRICHTUNG FÜR EINE WASSEROBERFLÄCHE UND VERFAHREN ZU DEREN VERWENDUNG
DISPOSITIF PHOTOVOLTAÏQUE À LA SURFACE DE L'EAU ET SON PROCÉDÉ D'UTILISATION

(30) Priority: 27.07.2023 CN 202310930709
(43) Date of publication of application: 29.01.2025
(73) Proprietor: China Three Gorges Corporation, Wuhan, Hubei 430010 (CN); China Three Gorges Construction Engineering Corporation, Chengdu Sichuan 610042 (CN)
(72) Inventor: TAN, Zhiguo, Wuhan, Hubei, 430010 (CN); GAO, Peng, Wuhan, Hubei, 430010 (CN); ZHAO, Qiang, Wuhan, Hubei, 430010 (CN); YAO, Feixiong, Wuhan, Hubei, 430010 (CN); GONG, Zhaoguang, Wuhan, Hubei, 430010 (CN); ZHOU, Jianbing, Wuhan, Hubei, 430010 (CN); YANG, Shuo, Wuhan, Hubei, 430010 (CN)
(74) Representative: Lewis Silkin LLP

(56) References cited:
- CN-B- 105 871 308
- CN-U- 205 615 670
- KR-A- 20230 074 953

## Description

### TECHNICAL FIELD

The present disclosure relates to the technical field of photovoltaic power generating, and particularly relates to a water surface photovoltaic device and a use method thereof.

### BACKGROUND

A water-bone photovoltaic plant refers to a photovoltaic plant constructed on water such as a pond, a canyon reservoir, a lake, and the like. With the continuous maturity of water floating technology and the continuous emergence of new materials, new technologies and new processes, the construction cost is continuously reduced. In recent years, a water-bone floating-type photovoltaic device becomes a new hot spot in the technical field of photovoltaic power generating, with a rapid increase in installed capacity. Document KR20230074953A relates to a mooring device that fixes a photovoltaic power generation device installed while floating in the ocean so that it does not move while floating on the water surface.

However, the current floating-type water surface photovoltaic devices are generally installed in open water. Taking a reservoir basin of a pumped storage power station as an example, a water level of the reservoir basin will fluctuate frequently, which leads to the change of a water surface area of the reservoir basin. How to make the water surface photovoltaic device adapt to the change of the water surface area of the reservoir basin as well as the large and frequent fluctuation of the water level and make full use of the water surface of the reservoir basin has become a technical problem that needs to be solved urgently by those skilled in the art.

### SUMMARY

However, a technical problem to be solved by the present disclosure is to overcome a defect that a water surface photovoltaic device in the prior art cannot adapt to the change of a water surface area of a reservoir basin as well as the large and frequent fluctuation of a water level, thereby providing a water surface photovoltaic device, which can adapt to the change of the water surface area and the water level of the reservoir basin, and can also make full use of the water surface of the reservoir basin. Because there are photovoltaic panels covering the water surface of the reservoir basin, the evaporation loss of water in the reservoir basin is greatly reduced, which is undoubtedly beneficial to the efficient use of water resources for projects with water shortage such as pumped storage power stations, reservoirs for water supply and water conservancy projects.

In order to solve the above problems, the present disclosure provides a water surface photovoltaic device, including:
a first floating photovoltaic module and a second floating photovoltaic module, wherein two opposite edges of the first floating photovoltaic module are defined as a first edge and a second edge respectively, the first edge of the first floating photovoltaic module is hinged with the second floating photovoltaic module, the second edge is adapted to be hinged with an inclined surface of a reservoir basin, the first floating photovoltaic module is adapted to extend and retract in a direction from the first edge to the second edge, and the second floating photovoltaic module is adapted to be placed on a water surface in the reservoir basin; and a rise adjustment system, including: a guide rail adapted to be laid on the inclined surface of the reservoir basin and extending in an inclined direction of the inclined surface; a first fixed pulley block fixedly arranged on the guide rail; a first floating component adapted to be arranged in the reservoir basin and moving up and down with a water level in the reservoir basin; a movable pulley block fixedly arranged on the first floating component and slidably connected with the guide rail; a second fixed pulley block fixedly connected with an edge of the second floating photovoltaic module; a rotation source fixedly arranged on the inclined surface of the reservoir basin, wherein a drive end of the rotation source is provided with a reel; and a traction component, wherein a first end of the traction component is wound around the reel of the rotation source, a middle portion of the traction component bypasses the first fixed pulley block, the movable pulley block and the second fixed pulley block back and forth in turn, and a second end of the traction component is fixed on the movable pulley block or the second fixed pulley block.

In some embodiments, the first floating photovoltaic module includes a first solar power generation unit consisting of a first float box and a first photovoltaic panel laid on the first float box; and/or, the second floating photovoltaic module includes a second solar power generating set consisting of a second float box and a second photovoltaic panel laid on the second float box.

In some embodiments, the first floating photovoltaic module includes a plurality of first solar power generation units, and the second floating photovoltaic module includes a plurality of second solar power generating sets.

In some embodiments, the plurality of first solar power generation units are arranged in turn in the direction from the first edge to the second edge and are hinged to each other, and one or more sets of telescopic joints are connected between the first solar power generation units.

In some embodiments, the one or more sets of telescopic joints are all located above a highest water level of the reservoir basin.

In some embodiments, the first floating photovoltaic module and the second floating photovoltaic module are rectangular, circular or irregular.

In some embodiments, the first float box is further provided with at least one row of climbing ladder on two sides of the first photovoltaic panel respectively, an included angle between a tread of each row of the climbing ladder and an axis of the floating drum is different, and the telescopic joint matched and hinged with each first float box is further provided with a climbing ladder with an angle consistent with the tread of the climbing ladder of the first float box.

In some embodiments, there is a first included angle between a surface of the first photovoltaic panel and the first float box; and there is a second included angle between a surface of the second photovoltaic panel and the second float box.

In some embodiments, the first included angle is defined as θ1, and 3‰≤θ1≤10%; and the second included angle is defined as 02, and 3‰≤θ2≤10%.

In some embodiments, the first fixed pulley block is fixedly arranged at an upper end of the guide rail, the inclined surface of the reservoir basin is provided with an anchor point and a bracket, and the guide rail is fixed on the inclined surface of the reservoir basin through the anchor point and the bracket.

In some embodiments, the water surface photovoltaic device further includes a tensioning mechanism adapted to be arranged on the bracket, and a first end of the traction component is connected with the tensioning mechanism.

In some embodiments, the tensioning mechanism includes: an safety gear fixedly sleeved on the reel; and a ratchet wheel arranged on the bracket and engaged with the safety gear, wherein when the safety gear moves in a direction of unclasping the traction component, the ratchet wheel is adapted to abut against the safety gear.

In some embodiments, the water surface photovoltaic device further includes a spraying mechanism adapted to spray water to the first floating photovoltaic module and the second floating photovoltaic module.

In some embodiments, the spraying mechanism includes: a water tank adapted to be arranged near a highest water level on the inclined surface of the reservoir basin, wherein the water tank is formed with a water inlet; a check valve arranged at the water inlet of the water tank and allowing water to flow into the water tank; a water pipe communicated with the water tank and extending onto the first floating photovoltaic module and the second floating photovoltaic module; a water valve arranged on the water pipe and adapted to block or conduct the water pipe; a first spray head and a second spray head, wherein the first spray head is located on the first floating photovoltaic module and is communicated with the water pipe, and the second spray head is located on the second floating photovoltaic module and is communicated with the water pipe; and a control module in communication connection with the water valve and adapted to control the water valve to be conducted during a night non-working period when the water level in the reservoir basin is lower than a preset water level.

In some embodiments, each inclined surface of the reservoir basin is uniformly provided with the first floating photovoltaic module.

In a second aspect of the present disclosure, there is provided a use method of the water surface photovoltaic device in the first aspect of the present disclosure, including: based on a slope of each inclined surface of the reservoir basin, a length of the inclined surface, and a distance between the inclined surfaces, determining a ratio coefficient & of the winding times between the first sections and the second sections of the traction components corresponding to each inclined surface, areas, shapes, section numbers and section lengths of the first floating photovoltaic module and the second floating photovoltaic module, section numbers of the telescopic joints and a section length of each telescopic joint; constructing the anchor point, the bracket, the guide rail and the water tank when the reservoir basin is at a lowest water level or a dry land state; installing the second floating photovoltaic module, including: installing the second floating photovoltaic module when the reservoir basin is in a highest water level state, installing the second solar power generating set of the second floating photovoltaic module on the water surface by using a lifting device, moving the second floating photovoltaic module to a center of the reservoir basin after assembling, and temporarily fixing the second floating photovoltaic module and the anchor point on the inclined surface of the reservoir basin; installing the first floating photovoltaic module, including: installing the first floating photovoltaic module on the inclined surface along the inclined surface of the reservoir basin in a bottom-up sequence by using a block installation mode, as the first floating photovoltaic module is in the highest water level, part of the first floating photovoltaic module sliding into the water to float, and a hinge point of the first edge of the first floating photovoltaic module being hinged and fixed with the second floating photovoltaic module while a position of the second floating photovoltaic module is regulated in cooperation; hinging and fixing the second edge of the uppermost first floating photovoltaic module 1 with the anchor point; and then installing the first floating photovoltaic module on other inclined surface by using the method, and hinging and fixing the first floating photovoltaic module with the second floating photovoltaic module one by one; installing the rise adjustment system, including: installing the first fixed pulley block, the movable pulley block, the first floating component and the second fixed pulley block in turn in a bottom-up sequence, installing the tensioning device, penetrating the traction component, and hingedly connecting the second fixed pulley block with the second floating photovoltaic module; performing overall regulating and debugging, including: performing overall regulating of the water surface photovoltaic device, and then regulating fluctuation of the water level in the reservoir basin, and performing debugging and pre-running on the water surface photovoltaic device; regulating tensioning of the traction component in combination with a running situation of the water surface photovoltaic device; and automatically cleaning the photovoltaic panel according to conditions and time set by a program.

In some embodiments, the determining the ratio coefficient & of the winding times between the first sections and the second sections of the traction components corresponding to each inclined surface includes: &=L1/L2; wherein, & is a number ratio of the traction components in the first section to the second section; L1 is the length of the inclined surface of the reservoir basin; and L2 is a length change difference from a waterline at a slope foot to the center of the reservoir basin.

The present disclosure has the following advantages.

The water surface photovoltaic device of this embodiment mainly includes the first floating photovoltaic module, the second floating photovoltaic module, the first fixed pulley block, the movable pulley block and the second fixed pulley block, and the traction component that bypasses the first fixed pulley block, the movable pulley block and the second fixed pulley block in turn. It is defined that a part of the traction component between the first fixed pulley block and the movable pulley block is the first section, and a part of the traction component between the movable pulley block and the second fixed pulley block is the second section. In principle, the traction components in the two segments are a whole piece. The ratio coefficient & of the winding times of two sections of the traction components are determined by calculating the first section and the second section in advance. The calculation is based on the ratio of the length of the inclined surface of the reservoir basin to the difference in distance from the waterline at the slope foot to the center of the reservoir basin, that is, the ratio of the length of the inclined surface of the reservoir basin to the difference in distance from the waterline at the slope foot to the center of the reservoir basin is equal to the ratio of the number of traction components in the first section to the number of traction components in the second section. That is to say, winding times of the traction components in the first section and the second section of the same inclined surface of the reservoir basin are generally different, and the ratio coefficients of different inclined surfaces are generally different.

The length of the inclined surface of the reservoir basin refers to a length of the inclined surface of the reservoir basin between the highest water level and the lowest water level. The difference in distance from the waterline at the slope foot to the center of the reservoir basin refers to a difference value from the water surface lines at the slope toes at the highest and lowest water levels to the center of the reservoir basin.

When the water level in the reservoir basin rises, a water area in the reservoir basin increases, and the second floating photovoltaic module can rise. The movable pulley block rises with the first floating component in the rising process of the water level, and a length of the first section is shortened accordingly. Because the first section and the second section are a whole traction component, the extra traction component by the length shortening of the first section is retracted into the second section, and a length of the second section is thus increased. Because of the existence of the above-mentioned ratio coefficient &, the inclined surfaces of the reservoir basin have different ratio coefficients because of different slopes, which means to have different ratio coefficients & that are automatically regulated and matched through the traction components of each inclined surface of the reservoir basin. Therefore, the water surface photovoltaic module remains in the middle position of the reservoir basin, and good lighting conditions are continuously obtained. This design does not need to use energy, and can realize the automatic regulation of the traction component and the automatic alignment with the water surface photovoltaic module only by buoyancy.

Due to the increase of the water area in the reservoir basin, the second floating photovoltaic module cannot take into account a surrounding vacant water area. In this case, the second floating photovoltaic module can ascend. Meanwhile, because the first floating photovoltaic module employs a multi-section photovoltaic panel hinged connection mode with one or more telescopic joints in a middle segment, in order to meet the need of free expansion and contraction of the telescopic joints, there is no photovoltaic panel on the telescopic joints, and the telescopic joints are hollow sealed structures with built-in springs, which can also serve as floating drums. The hollow sealed structure is preferably made of soft material, which can automatically retract when an external tension decreases, and automatically extend when the external tension increases, so as to meet the need of the length of the first floating photovoltaic module when the water level changes. In this way, some photovoltaic panels of the first floating photovoltaic module close to the second floating photovoltaic module gradually change from an inclined state to a floating state on the water surface, thus filling these vacant water areas, thereby fully utilizing the water surface of the reservoir basin.

When the water level in the reservoir basin descends, the water area in the reservoir basin decreases, and the second floating photovoltaic module can descend along with the water level. The movable pulley block descends along with the first floating component in the descending process of the water level, and the length of the first section is lengthened. Because the first section and the second section are a whole traction component, the first section is pulled from the second section because the first section needs a longer length of the traction component, and a pulling force is transmitted from a pulling force applied by the second floating photovoltaic module to the second fixed pulley block. Then, through internal tension balance and sliding of the traction component, the internal regulation of the lengths of the traction components in the first section and the second section among the first fixed pulley block, the movable pulley block and the second fixed pulley block is completed, so that the length of the second section is shortened. Because of the existence of the above ratio coefficient &, the inclined surfaces of the reservoir basin have different ratio coefficients because of different slopes, which means to have different ratio coefficients & that are automatically regulated and matched through the traction components of each inclined surface of the reservoir basin. The second floating photovoltaic module can be kept in the center of the reservoir basin under the traction of the traction component, so as to avoid collision between the second floating photovoltaic module and a rock wall of the reservoir basin due to the decreasing of the water area. Because the first floating photovoltaic module employs the multi-section photovoltaic panel hinged connection mode with one or more telescopic joints in the middle segment, part of the photovoltaic panels of the first floating photovoltaic module, which are originally floating on the water surface and close to the second floating photovoltaic module, are gradually changed from a state of floating horizontally on the water surface to a state of being out of the water surface and inclined on the inclined surface of the reservoir basin, adapting to a situation that the water area becomes smaller at any time, thus realizing automatic, dynamic and timely regulation with the fluctuation of the water level.

In conclusion, the water surface photovoltaic device of this embodiment can overcome the defect that the water surface photovoltaic device in the prior art cannot adapt to the change of the water surface area of the reservoir basin, thereby providing a water surface photovoltaic device, which can adapt to the change of the water surface area and the water level of the reservoir basin, and can also make full use of the water surface of the reservoir basin.

A use method of a water surface photovoltaic device according to a second aspect of the present disclosure includes or uses the water surface photovoltaic device according to the first aspect of the present disclosure, and thus has the beneficial effects of the water surface photovoltaic device, which is capable of overcoming the defect that the water surface photovoltaic device in the prior art cannot adapt to the change of the water surface area of the reservoir basin as well as the large and frequent fluctuation of the water level, thereby providing a water surface photovoltaic device, which can adapt to the change of the water surface area and the water level of the reservoir basin, and can also make full use of the water surface of the reservoir basin.

### BRIEF DESCRIPTION OF THE DRAWINGS

In order to illustrate the technical solutions in the specific embodiments of the present disclosure or in the related art more clearly, the drawings used in the description of the specific embodiments or the prior art will be briefly described below. Obviously, the drawings in the following description are merely some embodiments recorded in the present disclosure. For those of ordinary skills in the art, other drawings may also be obtained based on these drawings without going through any creative work.
FIG. 1 is a plan view of a water surface photovoltaic device according to the embodiments of the present disclosure;
FIG. 2 is a side view of the water surface photovoltaic device according to the embodiments of the present disclosure;
FIG. 3 is an enlarged view of a guide rail of the water surface photovoltaic device according to the embodiments of the present disclosure;
FIG. 4 is a perspective view of the guide rail of the water surface photovoltaic device according to the embodiments of the present disclosure;
FIG. 5 is an enlarged view of a tensioning mechanism according to the embodiments of the present disclosure;
FIG. 6 is a telescopic joint of the water surface photovoltaic device according to the embodiments of the present disclosure;
FIG. 7 is a front view of a first floating photovoltaic module according to the embodiments of the present disclosure;
FIG. 8 is a perspective view of the first floating photovoltaic module according to the embodiments of the present disclosure; and
FIG. 9 is a front view of a second floating photovoltaic module according to the embodiments of the present disclosure.

### Reference numerals:

1 - first floating photovoltaic module; 11 - first float box; 111 - first solar power generation unit; 12 - first photovoltaic panel; 13 - telescopic joint; 131 - floating drum; 132 - spring; 133 - foot step recess; 14 - climbing ladder; 2 - second floating photovoltaic module; 21 - second float box; 22 - second photovoltaic panel; 31 - first fixed pulley block; 32 - first floating component; 33 - movable pulley block; 34 - second fixed pulley block; 35 - traction component ; 4 - guide rail; 51 - rotation source; 52 - reel; 53 - safety gear; 54 - ratchet wheel; 55 - return spring; 61 - water tank; 62 - water pipe; 63 - first spray head; 64 - second spray head; 65 - water inlet; 66 - water valve; 7 - anchor point; 8 - power supply control cabinet; and 200 - reservoir basin.

### DETAILED DESCRIPTION OF THE EMBODIMENTS

The following clearly and completely describes the technical solutions of the present disclosure with reference to the drawings. Apparently, the described embodiments are merely some but not all of the embodiments of the present disclosure. Based on the embodiments of the present disclosure, all other embodiments obtained by those of ordinary skills in the art without going through any creative work shall fall within the protection scope of the present disclosure.

In the description of the present disclosure, it should be noted that, the orientation or positional relationship indicated by the terms "upper", "lower", "left", "right", "vertical", "horizontal", "inner", "outer" and the like is based on the orientation or positional relationship shown in the drawings, only for the convenience of describing the present disclosure and simplifying the description, and does and not indicate or imply that the indicated device or element must have a specific orientation, or be constructed and operated in a specific orientation. Therefore, the terms should not be construed as limiting the present disclosure. Moreover, the terms "first", "second" and "third" are used for descriptive purposes only and cannot be understood as indicating or implying relative importance.

In the description of the present disclosure, it should be noted that terms such as "installation", "connected" and "connection", etc., should be understood broadly, for example, the connection may be fixed connection, or detachable connection or integral connection; may be mechanical connection, and may also be electrical connection; and may be direct connection, may also be indirect connection through an intermediate medium, and may also be internal communication of two elements. The specific meaning of the above terms in the present disclosure, can be understood in a specific case by those of ordinary skills in the art.

In addition, the technical features involved in different embodiments of the present disclosure described below can be combined with each other as long as they do not constitute conflicts with each other.

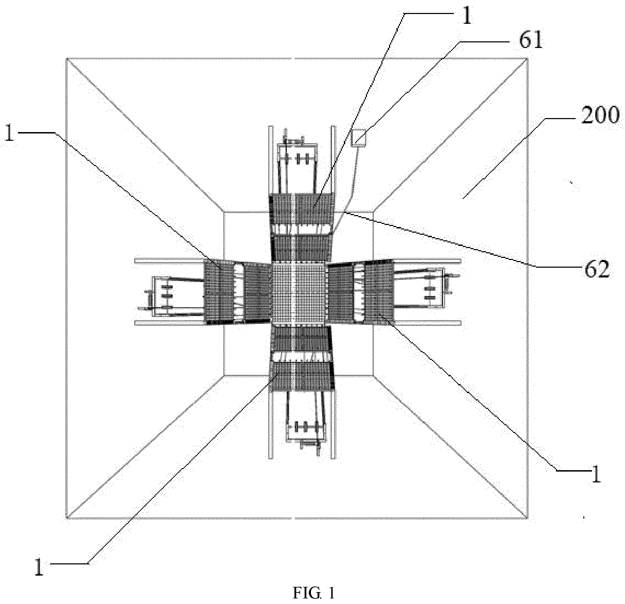

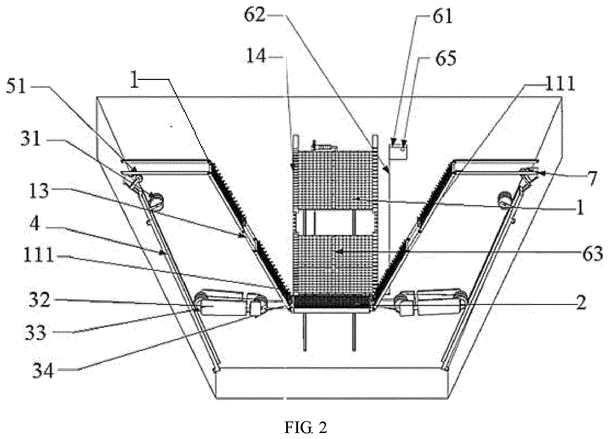

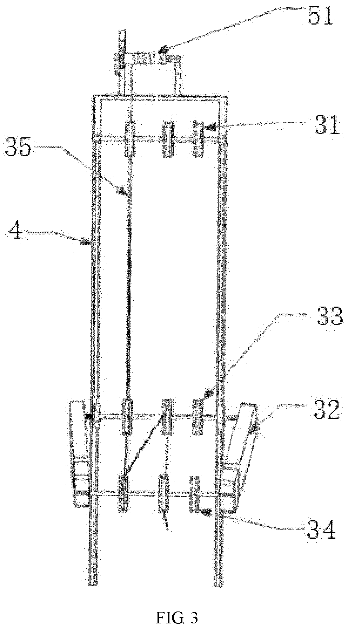

FIG. 1 is a plan view of a water surface photovoltaic device according to the embodiments of the present disclosure. FIG. 2 is a side view of the water surface photovoltaic device according to the embodiments of the present disclosure. FIG. 3 is an enlarged view of a guide rail of the water surface photovoltaic device according to the embodiments of the present disclosure. As shown in FIG. 1, FIG. 2 and FIG. 3, the water surface photovoltaic device of the embodiments of the present disclosure mainly includes a first floating photovoltaic module 1, a second floating photovoltaic module 2 and a rise adjustment system 3. The rise adjustment system includes a guide rail 4, a first fixed pulley block 31, a first floating component 32, a movable pulley block 33, a second fixed pulley block 34, a rotation source 51 and a traction component 35.

It is defined that the first floating photovoltaic module 1 and the second floating photovoltaic module 2 are both photovoltaic modules arranged on the buoyancy tank, and the modules are both integrated by a plurality of solar power generating sets. The first floating photovoltaic module 1 and the second floating photovoltaic module 2 may both select rectangular, circular or various irregular shapes in combination with a shape of a reservoir basin 200 to be disposed, so as to cover the water surface more fully and achieve better results. Two opposite edges of the first floating photovoltaic module 1 are defined as a first edge and a second edge respectively. The first edge of the first floating photovoltaic module 1 is hinged with the second floating photovoltaic module 2. The second edge is adapted to be hinged with an inclined surface of the reservoir basin 200. The first floating photovoltaic module 1 is adapted to extend and retract in a direction from the first edge to the second edge.

The second floating photovoltaic module 2 is adapted to be placed on a water surface in the reservoir basin 200. The guide rail 4 is adapted to be laid on the inclined surface of the reservoir basin 200 and extending in an inclined direction of the inclined surface. The first fixed pulley block 31 is fixedly arranged on the guide rail. The first floating component 32 is adapted to be arranged in the reservoir basin 200 and moving up and down with a water level in the reservoir basin 200. The movable pulley block 33 is fixedly arranged on the first floating component 32 and slidably connected with the guide rail 4 disposed on the inclined surface of the reservoir basin 200. The second fixed pulley block 34 is fixedly arranged on a second photovoltaic module or the second floating photovoltaic module 2. The rotation source 51 is fixedly arranged on the inclined surface of the reservoir basin 200, and the rotation source 51 is suitable for driving a reel to rotate. A first end of the traction component 35 is wound around the reel of the rotation source 51, a middle portion of the traction component 35 bypasses the first fixed pulley block 31, and then, the movable pulley block 33 and the second fixed pulley block 34 back and forth in turn. A second end of the traction component 35 is fixed on the movable pulley block 33 or the second fixed pulley block 34.

The water surface photovoltaic device of this embodiment mainly includes the first floating photovoltaic module 1, the second floating photovoltaic module 2, the first fixed pulley block 31, the movable pulley block 33 and the second fixed pulley block 34, and the traction component 35 that bypasses the first fixed pulley block 31, the movable pulley block 33 and the second fixed pulley block 34 in turn. It is defined that a part of the traction component 35 between the first fixed pulley block 31 and the movable pulley block 33 is a first section, and a part of the traction component 35 between the movable pulley block 33 and the second fixed pulley block 34 is a second section. In principle, the two segments of the traction component 35 are a whole piece. The first section and the second section are calculated in advance to determine a ratio coefficient & in winding times of the traction component in the first section and the second section. The calculation is based on a ratio of a length of the inclined surface of the reservoir basin 200 to a difference in distance from a waterline at a slope foot to a center of the reservoir basin, which means that the ratio of the length of the inclined surface of the reservoir basin 200 to the difference in distance from the waterline at the slope foot to the center of the reservoir basin is equal to a ratio of the number of traction components in the first section to the number of traction components in the second section. That is to say, winding times of the traction components in the first section and the second section of the same inclined surface of the reservoir basin 200 are generally different, and the ratio coefficients & of different inclined surfaces are generally different.

The length of the inclined surface of the reservoir basin 200 refers to a length of the inclined surface of the reservoir basin 200 between a highest water level and a lowest water level. The difference in distance from the waterline at the slope foot to the center of the reservoir basin refers to a difference value from the waterline at the slope foot at the highest and lowest water levels to the center of the reservoir basin.

When the water level in the reservoir basin 200 rises, a water area in the reservoir basin 200 increases, and the second floating photovoltaic module 2 can rise. The movable pulley block 33 rises with the first floating component 32 in the rising process of the water level, and a length of the first section is shortened accordingly. Because the first section and the second section are a whole traction component 35, the extra traction component 35 by the length shortening of the first section is retracted into the second section, and a length of the second section is thus increased. Because of the existence of the above-mentioned ratio coefficient &, the inclined surfaces of the reservoir basin 200 have different ratio coefficients because of different slopes, which means to have different ratio coefficients & that are automatically regulated and matched through the traction components 35 of each inclined surface of the reservoir basin 200. Therefore, the water surface photovoltaic module remains in the middle position of the reservoir basin 200, and good lighting conditions are continuously obtained. This design does not need to use energy, and can realize the automatic regulation of the traction component and the automatic alignment with the water surface photovoltaic module only by buoyancy.

Due to the increase of the water area in the reservoir basin 200, the second floating photovoltaic module cannot take into account a surrounding vacant water area. In this case, the second floating photovoltaic module 2 can ascend. Meanwhile, because the first floating photovoltaic module 1 employs a multi-section photovoltaic panel hinged connection mode with one or more telescopic joints 13 in a middle segment, in order to meet the need of free expansion and contraction of the telescopic joints 13, there is no photovoltaic panel on the telescopic joints 13, and the telescopic joints 13 are hollow sealed structures with built-in springs, which can also serve as floating drums. The hollow sealed structure is preferably made of soft material, which can automatically retract when an external tension decreases, and automatically extend when the external tension increases, so as to meet the need of the length of the first floating photovoltaic module 1 when the water level changes. In this way, some photovoltaic panels of the first floating photovoltaic module 1 close to the second floating photovoltaic module 2 gradually change from an inclined state to a floating state on the water surface, thus filling these vacant water areas, thereby fully utilizing the water surface of the reservoir basin 200.

When the water level in the reservoir basin 200 descends, the water area in the reservoir basin 200 decreases, and the second floating photovoltaic module 2 can descend along with the water level. The movable pulley block 33 descends along with the first floating component 32 in the descending process of the water level, and the length of the first section is lengthened accordingly. Because the first section and the second section are a whole traction component 35, the first section is pulled from the second section because the first section needs a longer length of the traction component 35, and a pulling force is transmitted from a pulling force applied by the second floating photovoltaic module 2 to the second fixed pulley block 34. Then, through internal tension balance and sliding of the traction component 35, the internal regulation of the lengths of the traction components 35 in the first section and the second sectopm among the first fixed pulley block 31, the movable pulley block 33 and the second fixed pulley block 34 is completed, so that the length of the second section is shortened. Because of the existence of the above ratio coefficient &, the inclined surfaces of the reservoir basin 200 have different ratio coefficients because of different slopes, which means to have different ratio coefficients & that are automatically regulated and matched through the traction components 35 of each inclined surface of the reservoir basin 200. The second floating photovoltaic module 2 can be kept in the center of the reservoir basin under the traction of the traction component 35, so as to avoid collision between the second floating photovoltaic module 2 and a rock wall of the reservoir basin 200 due to the decreasing of the water area. Because the first floating photovoltaic module 1 employs the multi-section photovoltaic panel hinged connection mode with one or more telescopic joints 13 in the middle segment, part of the photovoltaic panels of the first floating photovoltaic module 1, which are originally floating on the water surface and close to the second floating photovoltaic module 2, are gradually changed from a state of floating horizontally on the water surface to a state of being out of the water surface and inclined on the inclined surface of the reservoir basin 200, adapting to a situation that the water area becomes smaller at any time, thus realizing automatic, dynamic and timely regulation with the fluctuation of the water level.

During the above-mentioned movement, due to that shapes of each reservoir basin 200 are different and inclination angles of the inclined surfaces on each side of the same reservoir basin 200 are different, it may result in that difference values L between the length of the inclined surface above the water level of one inclined surface and the length from the edge of the second floating photovoltaic module 2 corresponding to the water level to the edge of the inclined surface of the reservoir basin 200 at any water level of the reservoir basin 200 are different in most cases. Therefore, it is necessary to set up the telescopic joints 13 with corresponding lengths between hinged points of the first floating photovoltaic modules 1 according to the difference value L. Similarly, even under the same water level with the same reservoir basin 200, the length difference values L of different inclined surfaces are also different, which means that the lengths of the telescopic joints 13 on the first floating photovoltaic module 1 also need to be set different. By adjusting the expansion and contraction of the telescopic joints 13, it is possible to accommodate the issue where, after some of the floating photovoltaic panel below partial hinged points on the the first floating photovoltaic module 1 changes to a horizontal state floating on the water surface due to the changes in water level, a remaining length of the first floating photovoltaic module 1 on the inclined surface does not match the length of the inclined surface above the water level. Therefore, in the present disclosure, the first floating photovoltaic module 1 is set to expand and contract in the direction from the first edge to the second edge, and when the second floating photovoltaic module 2 moves on the water surface, the first floating photovoltaic module 1 can expand and contract itself, so as to ensure that the position and the angle of the water surface photovoltaic device can be smoothly regulated.

Since the reservoir basin 200 tends to have an inverted trapezoidal sectional shape with a large upper portion and a small lower portion, when the water level in the reservoir basin 200 200 rises, although the length of the traction component in the first section is shorter, the length of the traction component 35 in the second section is required to be longer as the inclined surface of the reservoir basin 200 200 is farther from the center of the reservoir basin 200 toward the upper portion. The second fixed pulley block 34 can be kept in a central area of the reservoir basin 200 by the traction of the traction component 35 with the first fixed pulley block 31, the movable pulley block 33 and the second fixed pulley block 34, and the traction component 35 in the second section is extended. Because the traction component 35 is a whole, the extra length of the traction component 35 in the first section is transferred to the traction component 35 in the second section, which forms good complementarity and automatic regulation. Reasonable determination of the ratio of turns of the traction components 35 in the first section to the second section can ensure that the water surface photovoltaic device can be kept in the center of the reservoir basin 200 at various water levels. When the water level descends, part of the first floating photovoltaic module 1 will be automatically recovered to the inclined surface of the reservoir basin 200, and will not collide with the rock wall of the reservoir basin 200 due to the reduction of the water area. Therefore, the water surface photovoltaic device of the present disclosure can make the water surface photovoltaic device suitable for reservoir basins 200 with different sizes and side inclination angles, and has a wide application range, does not need to consume energy during the regulating process, and can realize automatic regulation of the traction component 35 and automatic centering of the water surface photovoltaic device only by buoyancy.

In conclusion, the water surface photovoltaic device of this embodiment can overcome the defect that the water surface photovoltaic device in the prior art cannot adapt to the change of the water surface area of the reservoir basin 200, thereby providing a water surface photovoltaic device, which can adapt to the change of the water surface area and the water level of the reservoir basin 200, and can also make full use of the water surface of the reservoir basin 200.

The first floating photovoltaic module 1 is preferably arranged on the inclined surface of the reservoir basin 200. In a preferred embodiment, each inclined surface of the reservoir basin 200 is uniformly provided with the first floating photovoltaic module 1.

Each reservoir basin 200 is optionally provided with a plurality of sets of water surface photovoltaic devices. For example, when the reservoir basin 200 is surrounded by a plurality of inclined surfaces, each inclined surface is optionally connected with one set of first floating photovoltaic modules 1. The second floating photovoltaic module 2 is preferably laid according to a minimum water area during the fluctuation of the reservoir basin 200, so as to ensure that the second floating photovoltaic module 2 of the water surface photovoltaic device will not collide with the rock wall of the reservoir basin 200 or the second floating photovoltaic module 2 will not interfere with each other during the fluctuation of the water level. The traction component 35 is preferably but not limited to a steel wire rope, a chain, a hemp rope or a nylon rope. For example, in this embodiment, the traction component 35 is a steel wire rope. The second fixed pulley block 34 is preferably connected with the edge of the second floating photovoltaic module 2, and is staggered from the first floating photovoltaic module 1 by a small angle from a vertical plane, so as to avoid interference with the second fixed pulley block 34, the first floating component 32, the traction component 35 and the like when the first floating photovoltaic modules 1 are partially converted from an inclined surface to a horizontal floating state on the water surface with the change of the water level.

In addition, the water surface photovoltaic device of this embodiment may be used in 200 kinds of non-open waters of various reservoir basins 200 such as valleys, open-cut tunnels and mine pits, which greatly expands the application range of the floating-type photovoltaic device and has a very wide application scene and prospect.

Preferably, before installing the water surface photovoltaic device, any point within the movement range of the movable pulley may be selected, and the ratio coefficient & between the first section and the second section is comprehensively calculated according to the angle of the inclined surface of the reservoir basin 200 here, an elevation of this position, and a distance L between this position and the center of the reservoir basin 200.

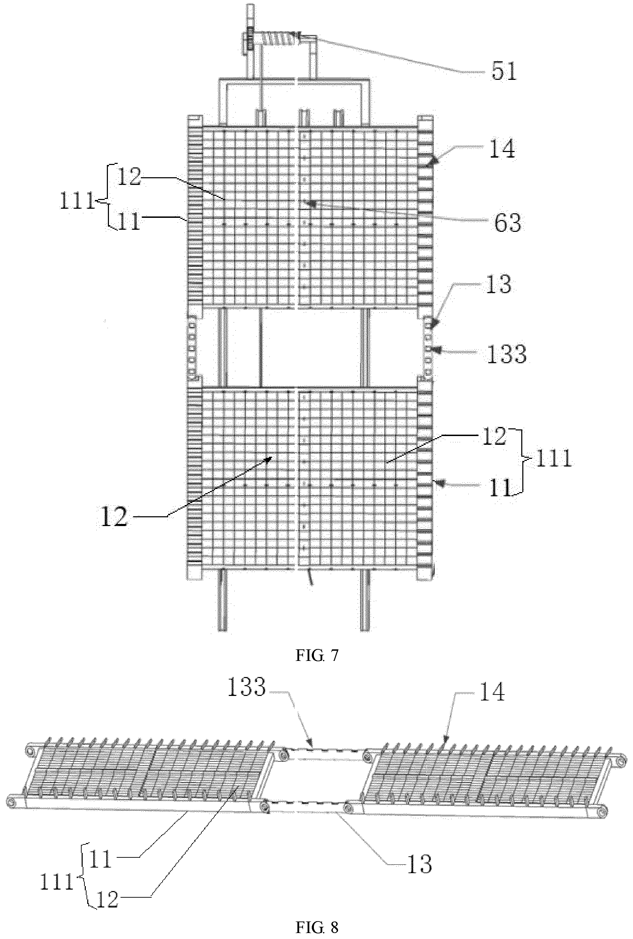

In this embodiment, as shown in FIG. 7 and FIG. 8, the first floating photovoltaic module 1 includes a first solar power generation unit consisting of a first float box 11 and a first photovoltaic panel 12 laid on the first float box 11; and/or, the second floating photovoltaic module 2 includes a second solar power generating set consisting of a second float box 21 and a second photovoltaic panel 22 laid on the second float box 21.

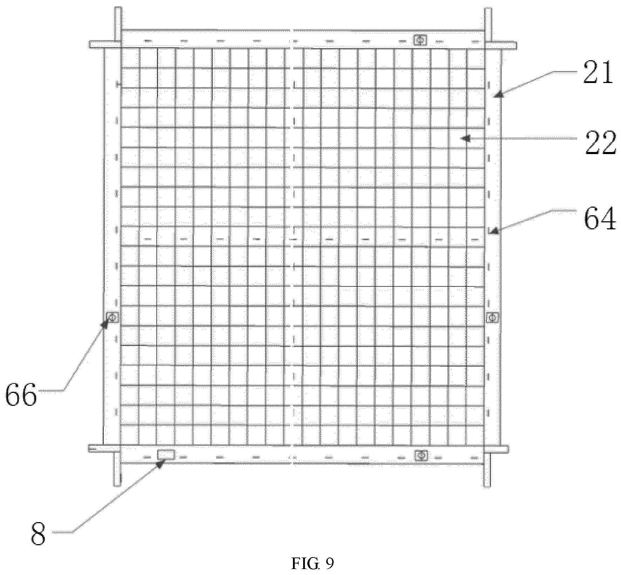

The first float box 11 and the second float box 21 can support the first photovoltaic panel 12 and the second photovoltaic panel 22 respectively, and ensure that the first photovoltaic panel 12 and the second photovoltaic panel 22 can rise and descend with the water level in the reservoir basin 200. Preferably, in this embodiment, as shown in FIG. 9, the second floating photovoltaic module 2 further includes a power supply control cabinet 8 arranged on the second float box 21 and an aisle staggered with the second photovoltaic panel 22. The power supply control cabinet 8 is used for the overall control of the water surface photovoltaic device in this embodiment, and the power supply control cabinet 8 may also be arranged on shore or other suitable positions as required. The power supply control cabinet 8 is internally provided with a signal power supply apparatus, a signal transceiving apparatus, a signal processing apparatus, a storage battery, a display device and the like. The aisle is used for an operator to pass through when installing or overhauling the water surface photovoltaic device.

Preferably, the first floating photovoltaic module 1 includes a plurality of first solar power generation units. The second floating photovoltaic module 2 includes a second solar power generating set. In order to ensure that the first floating photovoltaic module can expand and contract along the direction from the first edge to the second edge, in this embodiment, the plurality of first solar power generation units 111 are arranged along the direction from the first edge to the second edge in turn and hinged with each other, and one or more sets of telescopic joints 13 are connected between the first solar power generation units 111. One set of telescopic joints 13 are connected between two adjacent first solar power generation units 111. When the water level rises or falls, and the floating photovoltaic panel below some hinged points of the first floating photovoltaic modules 1 at different water lever height transition to a horizontal state floating on the water surface (when the water level rises) or from the horizontal state floating on the water surface to an inclined setting state of the inclined surface of the reservoir basin 200 (when the water level descends), if the remaining length of the first floating photovoltaic module 1 on the inclined surface does not match the actual length of the inclined surface above the water surface, the telescopic joint 13 may automatically expand and contract to adjust. The telescoping force is generated by a thrust of the second floating photovoltaic module 2 on the first floating photovoltaic module due to buoyancy.

Different solar power generating sets and section lengths of the telescopic joints 13 may be the same or different.

In a preferred embodiment, the telescopic joint 13 on the first floating photovoltaic module 1 is installed above the highest water level of the reservoir basin 200. By this arrangement, the telescopic joint 13 can always be located on a slope surface of the reservoir basin 200, and will not be transformed into a horizontal state with the increase of the water level in the reservoir basin 200, so as to ensure that the telescopic joint 13 can always regulate expansion and contraction automatically with the thrust of the second floating photovoltaic module 2 on the first floating photovoltaic module 1 to meet the needs of the length of the first floating photovoltaic module 1 under the change of the water level. Once the telescopic joint 13 is transformed into the horizontal state with the rising of the water level, the telescopic joint 13 cannot be expanded to compensate the length of the first floating photovoltaic module 1, but also occupy a space on the water surface, resulting in the reduction of a daylighting rate of the first solar power generation unit 111, and cannot cover the water surface and reduce the evaporation on the water surface.

In one embodiment, the first float box 11 is further provided with at least one row of climbing ladder 14 on two sides of the first photovoltaic panel 12 respectively. An included angle between a tread of each row of the climbing ladder 14 and an axis of the buoyancy tank is different, and the telescopic joint 13 matched and hinged with each first float box 11 is further provided with a climbing ladder 14 with an angle consistent with the tread of the climbing ladder 14 of the first float box 11.

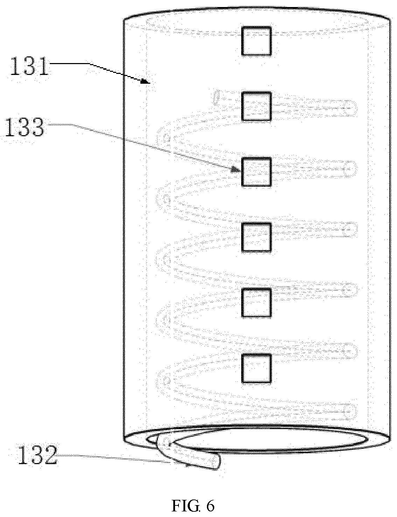

Preferably, in this embodiment, as shown in FIG. 6, the telescopic joint 13 includes a retractable floating drum 131 and a spring 132 arranged in the floating drum 131, and can expand and contract with the change of the water level and the change of a tensile force suffered by the second floating photovoltaic module 2. Preferably, the telescopic joint 13 is provided with a foot step recess 133, and the reservoir basin 200 has a plurality of inclined surfaces. The first floating photovoltaic module 1 installed on each inclined surface is provided with one or more climbing ladders. Tilt angles of upper treads of each climbing ladder from top to bottom with the axis of the telescopic joint 13 are the same, but the tilt angles of upper treads of different climbing ladders with the axis of the telescopic joint 13 are set to be different from each other, thus ensuring that the angle of at least one whole climbing ladder can meet up-down access requirements of an operator when the reservoir basin 200 is at different water levels. As an alternative embodiment, the telescopic joint 13 optionally includes a first rod segment and a second rod segment which are slidably connected with each other.

Upper surfaces of the first photovoltaic panel 12 and the second photovoltaic panel 22 are optionally horizontal planes. Preferably, in this embodiment, there is a first included angle between a surface of the first photovoltaic panel 12 and the first float box 11. There is a second included angle between a surface of the second photovoltaic panel 22 and the second float box 21. Thus, diversion slopes are formed on the surfaces of the first photovoltaic panel 12 and the second photovoltaic panel 22. Rainwater and cleaning water may flow down the diversion slopes, and will not stay on the first photovoltaic panel 12 and the second photovoltaic panel 22 to affect a power generating effect. Preferably, in this embodiment, the first photovoltaic panel 12 and the second photovoltaic panel 22 are obliquely arranged on the first float box 11 and the second float box 21, respectively, so that the diversion slopes are formed on the upper surfaces of the first photovoltaic panel 12 and the second photovoltaic panel 22. In this case, ordinary photovoltaic panels can meet use requirements, which is helpful to reduce the cost of the water surface photovoltaic device.

The first included angle is defined as θ1, and 3‰≤θ1≤10%. The second included angle is defined as 02, and 3‰≤θ2≤10%.The above-mentioned angle ranges are optimal ranges obtained through a large number of experiments, which can not only ensure that the rainwater and the cleaning water can flow down the diversion slopes, but also not reduce illumination areas of the photovoltaic panels. In a more preferred embodiment, the angle of the diversion slope is 4%. It should be noted that the angle range of the diversion slope is only a preferred range, and does not constitute a restrictive limitation on the tilt angle ranges of the first photovoltaic panel 12 and the second photovoltaic panel 22 in this solution. Setting the angles of the first photovoltaic panel 12 and the second photovoltaic panel 22 to other angles for diversion is also included in the protection scope of this solution.

As an alternative embodiment, cross sections of the first photovoltaic panel 12 and the second photovoltaic panel 22 may be set to be trapezoidal. In this case, the inclined surface can be naturally formed on the upper surface of the photovoltaic panel by horizontally installing a bottom surface of the photovoltaic panel on the buoyancy tank only, and the installation process is simple and convenient. Preferably, in this embodiment, the first photovoltaic panel 12 and the second photovoltaic panel 22 are obliquely arranged on the first float box 11 and the second float box 21, respectively, so that the diversion slopes are formed on the upper surfaces of the first photovoltaic panel 12 and the second photovoltaic panel 22. In this case, ordinary photovoltaic panels can meet use requirements, which is helpful to reduce the cost of the water surface photovoltaic device.

In this embodiment, as shown in FIG. 6, the first float box 11 is further provided with at least two rows of climbing ladders 14 extending from the first side edge to the second side edge. The climbing ladder 14 may be set to be variable or unchangeable in angle. Preferably, in this embodiment, the first float box 11 is further provided with one row of climbing ladder 14 with a fixed angle on two sides of the first photovoltaic panel 12 respectively. Therefore, the reservoir basin 200 has several inclined surfaces. When the reservoir basin 200 is at different water levels, the included angles between the first floating photovoltaic module 1 and the second floating photovoltaic module 2 are different, and the angle of the climbing ladder 14 itself changes accordingly. Because the tilt angles of each climbing ladder 14 are different, different climbing ladders 14 may be climbed by the operator at different water levels. By reasonably setting and calculating the tilt angle of the climbing ladder 14, it can be ensured that at least one climbing ladder 14 can be used when the reservoir basin 200 is at different water levels without setting the angle of the climbing ladder 14 to be variable, which greatly reduces the cost of the water surface photovoltaic device.

In this embodiment, the water surface photovoltaic device preferably further includes a guide rail 4 arranged along the inclined surface of the reservoir basin 200. The first fixed pulley block 31 is fixedly arranged at an upper end of the guide rail 4, and the movable pulley block 33 is suitable for sliding along the guide rail 4. Specifically, the guide rail 4 is optionally formed with a rail groove extending along a length direction thereof, and the first fixed pulley block 31 is fixed at an upper part of the rail groove by a pin shaft. The pin shaft of the movable pulley block 33 passes through the rail groove, can slide up and down along the rail groove, and is connected with the first floating component 32. The first floating component 32 is preferably, but not limited to, a buoyancy tank. Preferably, the inclined surface of the reservoir basin 200 is provided with an anchor point 7, and the guide rail 4 is fixed on the inclined surface of the reservoir basin 200 through the anchor point 7 and a bracket.

A fixed length of the traction component 35 is calculated based on the ratio coefficient & of the inclined surface of the reservoir basin to be installed in advance. However, in the process of repeated traction and stretching, the traction component 35 often produces a certain amount of elongation, which may lead to inaccurate positioning of the photovoltaic device, collision with a rock wall of the reservoir basin 200 or collision between the photovoltaic devices on the water surface. Preferably, in this embodiment, the water surface photovoltaic device further includes a tensioning mechanism adapted to be arranged on the inclined surface of the reservoir basin 200. A first end of the traction component 35 is connected with the tensioning mechanism. The tensioning mechanism can tension the traction component 35 after the traction component 35 produces elongation.

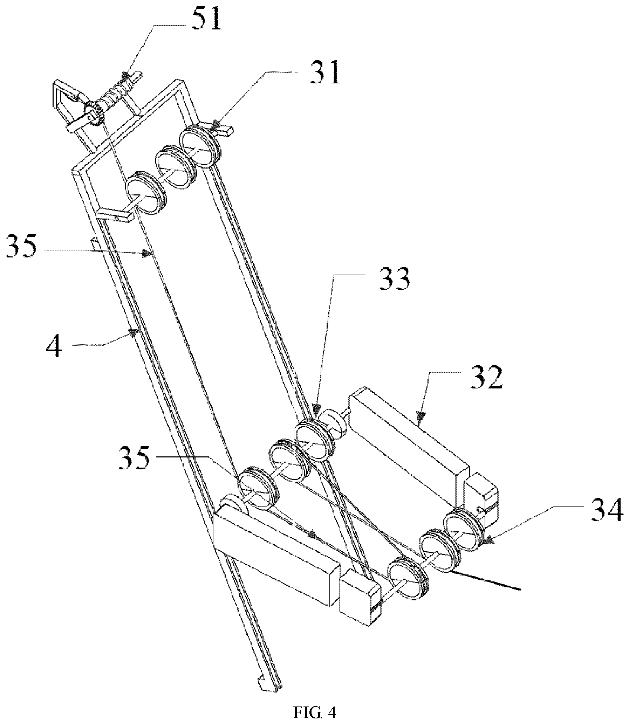

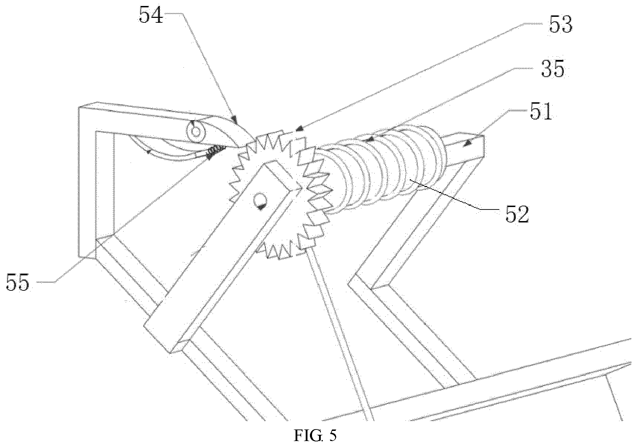

As shown in FIG. 4 and FIG. 5, the tensioning mechanism optionally includes a rotation source 51 and a reel 52 driven by the rotation source 51. The traction component 35 is wound around the reel 52. Preferably, in this embodiment, the tensioning mechanism includes the rotation source 51, the reel 52, an safety gear 53 and a ratchet wheel 54. The rotation source 51 is fixedly arranged on the inclined surface of the reservoir basin 200 or on an extension bracket at the upper end of the guide rail 4. The reel 52 is driven by the rotation source 51, and the traction component 35 is wound around the reel 52. The safety gear 53 is fixedly sleeved on the reel 52. The ratchet wheel 54 is arranged on the bracket and engaged with the safety gear 53. When the safety gear 53 moves in a direction of unclasping the traction component 35, the ratchet wheel 54 is adapted to abut against the safety gear 53, so as to avoid a safety risk caused by the slipping of the reel 52 during the rotation of the rotating shaft. In a more preferred embodiment, a return spring 55 is connected between the ratchet wheel 54 and a ratchet wheel bracket. The return spring 55 may be in a compressed state when the safety gear 53 moves in a direction of tensioning the traction component 35, so that the safety gear 53 and the ratchet wheel 54 will not affect the movement of the reel 52 in the tensioning direction and can rotate synchronously with the reel 52. However, the return spring 55 is in tension when the safety gear 53 moves in the direction of unclasping the traction component 35, so that the ratchet wheel 54 will prevent the safety gear 53 and the reel 52 from rotating, and avoid the safety risk caused by the slipping of the reel 52 slipping during the rotation of the rotating shaft. The tensioning mechanism further includes a reducer, and the reducer and the rotation source 51 form a tensioning winch. The rotation source 51 is optionally a device capable of outputting rotation, such as a motor, an engine, a hydraulic motor or a combination of one of the motor, the engine and the hydraulic motor and a reducer, or the like.

Preferably, in this embodiment, the water surface photovoltaic device further includes a spraying mechanism adapted to spray water to the first floating photovoltaic module 1 and the second floating photovoltaic module 2. The spraying mechanism can spray and clean the photovoltaic panel regularly, so that pollutants are prevented from being present on the surface of the photovoltaic panel to reduce the reduction of power generating efficiency.

The spraying mechanism optionally includes a water pipe 62 and a first spray head 63 and a second spray head 64 respectively arranged toward the first photovoltaic panel 12 and the second photovoltaic panel 22. The first spray head 63 and the second spray head 64 are both connected to a water outlet end of the water pipe 62. The spraying mechanism includes a water tank 61, a check valve, the water pipe 62, a water valve 66, the first spray head 63, the second spray head 64 and a control module. The water tank is adapted to be arranged near a highest water level on the inclined surface of the reservoir basin 200, and the water tank is formed with a water inlet 65. The check valve is arranged at the water inlet 65 of the water tank 61, and allows water to flow into the water tank 61, and also prevents water in the water tank 61 from flowing out. The water pipe 62 is communicated with the water tank 61 and extending onto the first floating photovoltaic module 1 and the second floating photovoltaic module 2. The water valve 66 is connected with the water pipe 62 and adapted to block or conduct the water pipe 62. As for the first spray head 63 and the second spray head 64, the first spray head 63 is located on the first floating photovoltaic module 1 and is communicated with the water pipe 62, and the second spray head 64 is located on the second floating photovoltaic module 2 and is communicated with the water pipe 62. The control module is in communication connection with the water valve 66 and adapted to control the water valve 66 to be conducted when the water level in the reservoir basin 200 is lower than a preset water level.

Therefore, when the water level in the reservoir basin 200 is high, the water can flood the water tank 61, and the water in the reservoir basin 200 enters the water tank 61 through the check valve, thereby supplying water to the water tank 61. When the water level in the reservoir basin 200 drops below the preset water level at night, the control module can control the water valve 66 to be conducted, so that the water in the water tank 61 can flow into the first spray head 63 and the second spray head 64, thereby spraying and washing the first photovoltaic panel 12 and the second photovoltaic panel 22. The water tank 61 is preferably set near the highest water level of the reservoir basin 200, and the preset water level is preferably set near the lowest water level of the reservoir basin 200, which can ensure a large water pressure difference. The spraying mechanism of the present disclosure can convert potential energy of water into water pressure, realize automatic spraying, and have a good cleaning effect on the first photovoltaic panel 12 and the second photovoltaic panel 22. Generally, the cleaning is automatically or manually controlled by a control system according to the program setting in the non-working period near the lowest water level of the reservoir basin 200, relying on a time controller and a water level controller.

The control module is preferably arranged in a main control cabinet, and the first spray head 63 and the second spray head 64 are controlled by controlling the water valve 66 to clean the first floating photovoltaic module 1 and the second floating photovoltaic module 2. The control module may include a programmable logic control unit (such as PLC or CPU), a memory and an electronic component connected with the programmable logic control unit, which are well known to those skilled in the art and will not be described in detail here.

One water valve 66 is provided optionally, which can cut off or connect the first spray head 63 and the second spray head 64 at the same time. Preferably, in this embodiment, the water pipe 62 includes a first branch pipe adapted to be connected with the first spray head 63 and a second branch pipe connected with the second spray head 63. Each branch pipe is provided with one water valve 66, so that independent control of the first spray head 63 and the second spray head 64 can be completed. Two water valves 66 are preferably, but not limited to, be respectively arranged on the first floating photovoltaic module 1 and the second floating photovoltaic module 2.

Moreover, when the first photovoltaic panel 12 and the second photovoltaic panel 22 are cleaned at night, it can be ensured that the first photovoltaic panel 12 and the second photovoltaic panel 22 can be in a dry state during the day without affecting the normal power generating of the water surface photovoltaic device.

Both the first spray head 63 and the second spray head 64 can be set to be one or more. Preferably, in this embodiment, the spraying mechanism includes a plurality of first spray heads 63. A plurality of first spray heads 63 are arranged around each first photovoltaic panel 12. The water pipe 62 is connected with the plurality of first spray heads 63 in turn. The spraying mechanism includes a plurality of second spray heads 64, and the plurality of second spray heads 64 are arranged around each second photovoltaic panel 22. The water pipe 62 is connected with the plurality of second spray heads 64 in turn. Setting the spray head around the photovoltaic panel can effectively improve the cleaning effect of the spray head on the photovoltaic panel.

A second aspect of the present disclosure provides a use method of a water surface photovoltaic device, which includes steps S1, S2, S3, S4, S5, S6, S7 and S8. Wherein:

At step S1, based on a slope of each inclined surface of a reservoir basin 200, a length of the inclined surface, and a distance between the inclined surfaces, a ratio coefficient & in winding times of traction components 35 in a first section and a second section corresponding to each inclined surface, areas, shapes, section numbers and section lengths of a first floating photovoltaic module 1 and a second floating photovoltaic module 2, section numbers of telescopic joints 13 and a section length of each telescopic joint 13 are determined.

A section number of a first solar power generation unit refers to a number of first solar power generation units included in each first floating photovoltaic module 1. A section number of a second solar power generating set refers to a number of second solar power generating sets included in the second floating photovoltaic module. A total section length refers to a length of the first solar power generation unit along a direction from a first edge to a second edge. A number of the telescopic joints along the direction from the first edge to the second edge is the section numbers of the telescopic joints. A product of the section length and the section number of the telescopic joint is a total length of the telescopic joint. The distance between the inclined surfaces includes a distance between two adjacent inclined surfaces of the reservoir basin.

The distance between two adjacent inclined surfaces is used for determining a width of the first floating photovoltaic module 1. The distance between two adjacent inclined surfaces may refer to a maximum distance (that is, a linear distance between opposite vertices) between two adjacent inclined surfaces. When the distance between two inclined surfaces is larger, the width of the first floating photovoltaic module can be set larger, and the adjacent first floating photovoltaic modules are not easy to interfere.

A compensation distance of a single inclined surface is a difference between a first distance and a second distance.

The first distance is a distance between a junction of a water surface and the inclined surface of the reservoir basin and a nearest edge of the second floating photovoltaic module when the reservoir basin is at a highest water level.

The second distance is a distance between a junction of the water surface and the inclined surface of the reservoir basin and the nearest edge of the second floating photovoltaic module when the reservoir basin is at a lowest water level.

The section numbers of the first solar power generation unit, the section length of the first solar power generation unit, the section numbers of the telescopic joints and the section length of the telescopic joint can be obtained through the compensation distance of the inclined surface and the length of the inclined surface. Specifically:

when the reservoir basin is at the lowest water level, all the first solar power generation units in the first floating photovoltaic module are in an inclined state, and all the telescopic joints are in tension.

When the reservoir basin 200 is at the highest water level, part of the first solar power generation units 111 are transformed into a horizontal state, and the sum of the section lengths of this part of first solar power generation units 111 (that is, the sum of the lengths of the solar power generating sets 111 below the highest water level of the reservoir basin 200) is approximately equal to the compensation length of the inclined surface. Those skilled in the art can confirm the section numbers of this part of first solar power generation units 111 based on experience and actual use. The sum of the length of the remaining first solar power generation units 111 and the length of the telescopic joint 13 in the compressed state is the length of the first floating photovoltaic module 1 above the highest water level of the reservoir basin 200.

The sum of the length of the inclined surface of the reservoir basin 200 between the highest water level and the lowest water level minus the length of the telescopic joint 13 in tension is the sum of the length of the first solar power generation units 111.

When the reservoir basin 200 is at the highest water level, an original length of the first floating photovoltaic module 1 is subtracted from the sum of the length of the first solar power generation units 111 in the horizontal state and the sum of the length of the telescopic joints in the compressed state, that is, the sum of the length of the remaining first solar power generation units 111 in the inclined state is obtained. Those skilled in the art can select a reasonable section number of the remaining first solar power generation units 111 based on the sum of the length of the remaining first solar power generation units 111 in the inclined state, which is generally one to three sections.

Those skilled in the art can reasonably design parameters such as the section number of the first solar power generation unit, the section length of each first solar power generation set 111, the section number of the telescopic joint 13 and the section length of the telescopic joint 13 based on the above-mentioned length relationship and their own experience.

The shapes, the areas, the section numbers and the section lengths of the first floating photovoltaic module 1 and the second floating photovoltaic module 2 are mainly selected based on the shape and the area of the reservoir basin 200 so as to cover the water surface as fully as possible.

Based on the slope of the inclined surface of the reservoir basin 200 and the length of the inclined surface, the ratio coefficient & in winding times of the traction components 35 corresponding to the inclined surface can be obtained: when the slope of the inclined surface of the reservoir basin 200 are different, the ratio coefficient is different, that is, a ratio of the length of the inclined surface of the reservoir basin 200 to a length change difference from a waterline at a slope foot to a center of the reservoir basin 200 is equal to a ratio of a number of the traction components 35 in the first section to a number of the traction components 35 in the second section.

At step S2, an anchor point 7, a bracket, a guide rail 4 and a water tank 61 are constructed when the reservoir basin 200 is at a lowest water level or a dry land state.

At step S3, the second floating photovoltaic module 2 is installed, including: installing the second floating photovoltaic module 2 when the reservoir basin is in a highest water level state, installing the second solar power generating set of the second floating photovoltaic module 2 on the water surface by using a lifting device, moving the second floating photovoltaic module 2 to the center of the reservoir basin 200 after assembling, and temporarily fixing the second floating photovoltaic module 2 and the anchor point on the inclined surface of the reservoir basin.

At step S4, the first floating photovoltaic module is installed, including: installing the first floating photovoltaic module 1 on the inclined surface along the inclined surface of the reservoir basin in a bottom-up sequence by using a block installation mode, as the first floating photovoltaic module 1 is in the highest water level, part of the first floating photovoltaic module 1 sliding into the water to float, and a hinge point of the first edge of the first floating photovoltaic module 1 being hinged and fixed with the second floating photovoltaic module 2 while a position of the second floating photovoltaic module 2 is regulated in cooperation; hinging and fixing the second edge of the uppermost first floating photovoltaic module 1 with the anchor point; and then installing the first floating photovoltaic module 1 on other inclined surface by using the method, and hinging and fixing the first floating photovoltaic module 1 with the second floating photovoltaic module 2 one by one.

At step S5, a rise adjustment system is installed, including: installing a first fixed pulley block 31, a movable pulley block 33, a first floating component 32 and a second fixed pulley block 34 in turn in a bottom-up sequence, installing a tensioning device, penetrating the traction component 35, and hingedly connecting the second fixed pulley block 34 with the second floating photovoltaic module 2.

At step S6, overall regulating and debugging are performed, including: performing overall regulating of the water surface photovoltaic device, and then regulating fluctuation of the water level in the reservoir basin, and performing debugging and pre-running on the water surface photovoltaic device.

Debugging of a mechanical structure includes regulating a length of the traction component and a turn ratio of the traction components in the first section and the second section based on the actual use. It is judged whether connection between various mechanisms is reliable or not, and parts with unreliable connection are overhauled.

Debugging of electrical control includes judging whether a spraying mechanism can spray a photovoltaic panel according to a predetermined procedure, and whether the collection of the photovoltaic panel and the conversion of electric energy can meet the requirements, or the like.

The pre-running mainly includes several cycles of debugging based on the fluctuation of the water level of the reservoir basin.

At step S7, tensioning of the traction component 35 is regulated in combination with a running situation of the water surface photovoltaic device.

The regulating mainly includes: after the traction component 35 produces an amount of elongation, the traction component 35 is tensioned by using a tensioning mechanism. Preferably, in this embodiment, the tensioning mechanism is adapted to regulate the tension of the traction component irregularly, and the irregular regulation optionally means to regulate the tension when the amount of elongation of the traction component exceeds a predetermined value, or a time interval of the tension regulation is determined according to use experience of an operator.

At step S8, according to conditions and time set by a program, the photovoltaic panel is automatically cleaned and regulated in time to ensure an optimal cleaning effect.

In one embodiment, automatically cleaning the photovoltaic panel according to the conditions and the time set by the program refers to: the spraying mechanism is controlled to spray the photovoltaic panel at night when the water level in the reservoir basin is near the lowest water level.

In one embodiment, the ratio coefficient & in winding times of the traction components 35 in the first section and the second section corresponding to each inclined surface includes: &=L1/L2;
wherein, & is the ratio coefficient in winding times of the traction component (35);
L1 is the length of the inclined surface of the reservoir basin 200 in unit of m; and
L2 is the length change difference from the waterline at the slope foot to the center of the reservoir basin 200.

The length of the inclined surface of the reservoir basin 200 refers to a length of the inclined surface of the reservoir basin 200 from the highest water level to the lowest water level. The difference in distance from the waterline at the slope foot to the center of the reservoir basin refers to the difference value from the waterline at the slope foot at the highest water level and the lowest water level to the center of the reservoir basin. In conclusion, the water surface photovoltaic device according to the present disclosure has the following advantages:
(I) The present disclosure has strong novelty. The present disclosure breaks through traditional inherent thinking, makes full use of the buoyancy of water, skillfully realizes the automatic regulation of the position of the photovoltaic system, and realizes the automatic cleaning of the photovoltaic panel through the potential energy of water height difference. In the operation process of the system, it is almost unnecessary to use other energy sources, which not only makes the system setup and device simpler, but also further achieves the effects of energy saving, simplicity and reliability.
(II) The present disclosure has strong universality. In the past, floating-type photovoltaics were generally only used in open waters, but the present disclosure may be used in non-open waters of various reservoir basins 200 such as valleys, open-cut tunnels and mine pits, which greatly expands the application scope of the floating-type photovoltaics and has a very wide application scene and prospect.
(III) The present disclosure has strong applicability. Due to the arrangement of an auto-regulating traction system, the present disclosure may also be used in various artificial or natural waters formed by the transformation of large water level fluctuation, and has very good applicability.

Obviously, the above-mentioned embodiments are merely examples for clarity of illustration and are not intended to limit the modes of execution. For those of ordinary skills in the art, other different forms of changes or variations can be made based on the above description. It is not necessary or possible to exhaust all the implementations here. Obvious changes or variations derived therefrom are still within the scope of protection of the present disclosure.

## Claims

1. A water surface photovoltaic device, comprising:
a first floating photovoltaic module (1) and a second floating photovoltaic module (2), wherein two opposite edges of the first floating photovoltaic module (1) are defined as a first edge and a second edge respectively, the first edge of the first floating photovoltaic module (1) is hinged with the second floating photovoltaic module (2), the second edge is adapted to be hinged with an inclined surface of a reservoir basin (200), the first floating photovoltaic module (1) is adapted to extend and retract in a direction from the first edge to the second edge, and the second floating photovoltaic module (2) is adapted to be placed on a water surface in the reservoir basin (200); and
a rise adjustment system (3), comprising:
a guide rail (4) adapted to be laid on the inclined surface of the reservoir basin (200) and extending in an inclined direction of the inclined surface; and a first fixed pulley block (31) fixedly arranged on the guide rail (4);
a first floating component (32) adapted to be arranged in the reservoir basin (200) and moving up and down with a water level in the reservoir basin (200); and a movable pulley block (33) fixedly arranged on the first floating component (32) and slidably connected with the guide rail (4);
a second fixed pulley block (34) fixedly connected with an edge of the second floating photovoltaic module (2);
a rotation source (51) fixedly arranged on the inclined surface of the reservoir basin (200), wherein a drive end of the rotation source (51) is provided with a reel (52); and
a traction component (35), wherein a first end of the traction component (35) is wound around the reel (52) of the rotation source (51), a middle portion of the traction component (35) bypasses the first fixed pulley block (31), the movable pulley block (33) and the second fixed pulley block (34) back and forth in turn, and a second end of the traction component (35) is fixed on the movable pulley block (33) or the second fixed pulley block (34).

2. The water surface photovoltaic device according to claim 1, wherein the first floating photovoltaic module (1) comprises one or more first solar power generation units (111) consisting of a first float box (11) and a first photovoltaic panel (12) laid on the first float box (11); and/or;
the second floating photovoltaic module (2) comprises one or more second solar power generating sets consisting of a second float box (21) and a second photovoltaic panel (22) laid on the second float box (21).

3. The water surface photovoltaic device according to claim 2, wherein the plurality of first solar power generation units (111) are arranged in turn in the direction from the first edge to the second edge and are hinged to each other, and one or more sets of telescopic joints (13) are connected between the first solar power generation units (111), wherein the one or more sets of telescopic joints (13) are all located above a highest water level of the reservoir basin (200).

4. The water surface photovoltaic device according to any one of claims 1 to 3, wherein the first floating photovoltaic module (1) and the second floating photovoltaic module (2) are rectangular, circular or irregular.

5. The water surface photovoltaic device according to any one of claims 2 to 3, wherein the first float box (11) is further provided with at least one row of climbing ladder (14) on two sides of the first photovoltaic panel (12) respectively, an included angle between a tread of each row of the climbing ladder (14) and an axis of the floating drum is different, and on the telescopic joint (13) installed and hinged with each first float box (11), a climbing ladder (14) with an angle consistent with the tread of the climbing ladder (14) of the first float box (11) is also arranged.

6. The water surface photovoltaic device according to any one of claims 2 to 3, wherein there is a first included angle between a surface of the first photovoltaic panel (12) and the first float box (11); and there is a second included angle between a surface of the second photovoltaic panel (22) and the second float box (21).

7. The water surface photovoltaic device according to claim 6, wherein the first included angle is defined as θ1, and 3‰≤θ1≤10%; and
the second included angle is defined as 02, and 3‰≤θ2≤10%.

8. The water surface photovoltaic device according to any one of claims 1 to 3, wherein the first fixed pulley block (31) is fixedly arranged at an upper end of the guide rail (4), the inclined surface of the reservoir basin (200) is provided with an anchor point (7) and a bracket, and the guide rail (4) is fixed on the inclined surface of the reservoir basin (200) through the anchor point (7) and the bracket.

9. The water surface photovoltaic device according to claim 8, wherein the water surface photovoltaic device further comprises a tensioning mechanism adapted to be arranged on the bracket, and a first end of the traction component (35) is connected with the tensioning mechanism.

10. The water surface photovoltaic device according to claim 9, wherein the tensioning mechanism comprises:
an safety gear (53) fixedly sleeved on the reel (52); and
a ratchet wheel (54) arranged on the bracket and engaged with the safety gear (53), wherein when the safety gear (53) moves in a direction of unclasping the traction component (35), the ratchet wheel (54) is adapted to abut against the safety gear (53).

11. The water surface photovoltaic device according to any one of claims 1 to 3, further comprising a spraying mechanism adapted to spray water to the first floating photovoltaic module (1) and the second floating photovoltaic module (2).

12. The water surface photovoltaic device according to claim 11, wherein the spraying mechanism comprises:
a water tank (61) adapted to be arranged near a highest water level on the inclined surface of the reservoir basin (200), wherein the water tank (61) is formed with a water inlet (65);
a check valve arranged at the water inlet (65) of the water tank (61) and allowing water to flow into the water tank (61);
a water pipe (62) communicated with the water tank (61) and extending onto the first floating photovoltaic module (1) and the second floating photovoltaic module (2);
a water valve (66) arranged on the water pipe (62) and adapted to block or conduct the water pipe (62);
a first spray head (63) and a second spray head (64), wherein the first spray head (63) is located on the first floating photovoltaic module (1) and is communicated with the water pipe (62), and the second spray head (64) is located on the second floating photovoltaic module (2) and is communicated with the water pipe (62); and
a control module in communication connection with the water valve (66) and adapted to control the water valve (66) to be conducted during a night non-working period when the water level in the reservoir basin (200) is lower than a preset water level.

13. The water surface photovoltaic device according to any one of claims 1 to 3, wherein each inclined surface of the reservoir basin (200) is uniformly provided with the first floating photovoltaic module (1).

14. A use method of the water surface photovoltaic device according to any one of claims 1 to 13, comprising:
based on a slope of each inclined surface of the reservoir basin (200), a length of the inclined surface, and a distance between the inclined surfaces, determining a ratio coefficient & in winding times of the traction components (35) in a first section and a second section corresponding to each inclined surface, areas, shapes, section numbers and section lengths of the first floating photovoltaic module (1) and the second floating photovoltaic module (2), section numbers of the telescopic joints (13) and a section length of each telescopic joint (13);
constructing the anchor point (7), the bracket, the guide rail (4) and the water tank (61) when the reservoir basin (200) is at a lowest water level or a dry land state;
installing the second floating photovoltaic module (2), comprising: installing the second floating photovoltaic module (2) when the reservoir basin is in a highest water level state, installing the second solar power generating set of the second floating photovoltaic module (2) on the water surface by using a lifting device, moving the second floating photovoltaic module (2) to a center of the reservoir basin (200) after assembling, and temporarily fixing the second floating photovoltaic module (2) and the anchor point (7) on the inclined surface of the reservoir basin (200);
installing the first floating photovoltaic module (1), comprising: installing the first floating photovoltaic module (1) on the inclined surface along the inclined surface of the reservoir basin (200) in a bottom-up sequence by using a block installation mode, as the first floating photovoltaic module (1) is in the highest water level, part of the first floating photovoltaic module (1) sliding into the water to float, and a hinge point of the first edge of the first floating photovoltaic module (1) being hinged and fixed with the second floating photovoltaic module (2) while a position of the second floating photovoltaic module (2) is regulated in cooperation;
hinging and fixing the second edge of the uppermost first floating photovoltaic module (1) with the anchor point; and then installing the first floating photovoltaic module (1) on other inclined surface by using the method, and hinging and fixing the first floating photovoltaic module (1) with the second floating photovoltaic module (2) one by one;
installing the rise adjustment system, comprising: installing the first fixed pulley block (31), the movable pulley block (33), the first floating component (32) and the second fixed pulley block (34) in turn in a bottom-up sequence, installing the tensioning device, penetrating the traction component (35), and hingedly connecting the second fixed pulley block (34) with the second floating photovoltaic module (2);
performing overall regulating and debugging, comprising: performing overall regulating of the water surface photovoltaic device, and then regulating fluctuation of the water level in the reservoir basin, and performing debugging and pre-running on the water surface photovoltaic device;
regulating tensioning of the traction component (35) in combination with a running situation of the water surface photovoltaic device; and
automatically cleaning the photovoltaic panel according to conditions and time set by a program.

15. The use method according to claim 14, wherein the determining the ratio coefficient & of winding times of the traction components (35) in the first section and the second section corresponding to each inclined surface comprises: &=L1/L2;
wherein, & is a ratio of number of the first section of the traction components (35) to number of the second section of the traction components (35);
L1 is the length of the inclined surface of the reservoir basin (200); and
L2 is a difference in distance from a waterline at a slope foot to the center of the reservoir basin (200).

## Patentansprüche

1. Wasserflächen-Photovoltaikvorrichtung, die Folgendes umfasst:
ein erstes schwimmendes Photovoltaikmodul (1) und ein zweites schwimmendes Photovoltaikmodul (2), wobei zwei gegenüberliegende Kanten des ersten schwimmenden Photovoltaikmoduls (1) als eine erste Kante bzw. eine zweite Kante definiert sind, die erste Kante des ersten schwimmenden Photovoltaikmoduls (1) mit dem zweiten schwimmenden Photovoltaikmodul (2) gelenkig verbunden ist, die zweite Kante ausgelegt ist, mit einer geneigten Fläche eines Speicherbeckens (200) gelenkig verbunden zu sein, das erste schwimmende Photovoltaikmodul (1) ausgelegt ist, in einer Richtung von der ersten Kante zur zweiten Kante aus- und einzufahren, und das zweite schwimmende Photovoltaikmodul (2) ausgelegt ist, auf einer Wasserfläche im Speicherbecken (200) angeordnet zu sein; und
ein Anstiegsanpassungssystem (3), das Folgendes umfasst:
eine Führungsschiene (4), die ausgelegt ist, auf der geneigten Fläche des Speicherbeckens (200) verlegt zu sein, und sich in einer Neigungsrichtung des geneigten Fläche erstreckt; und einen ersten feststehenden Rollenblock (31), der auf der Führungsschiene (4) feststehend angeordnet ist;
eine erste Schwimmkomponente (32), die ausgelegt ist, im Speicherbecken (200) angeordnet zu sein, und sich mit einem Wasserpegel im Speicherbecken (200) auf und ab bewegt; und einen beweglichen Rollenblock (33), der auf der ersten Schwimmkomponente (32) feststehend angeordnet ist und mit der Führungsschiene (4) gleitend verbunden ist;
einen zweiten feststehenden Rollenblock (34), der mit einer Kante des zweiten schwimmenden Photovoltaikmoduls (2) fest verbunden ist;
eine Rotationsquelle (51), die auf der geneigten Fläche des Speicherbeckens (200) feststehend angeordnet ist, wobei ein Antriebsende der Rotationsquelle (51) mit einer Winde (52) versehen ist; und
eine Zugkomponente (35), wobei ein erstes Ende der Zugkomponente (35) um die Winde (52) der Rotationsquelle (51) gewickelt ist, ein mittlerer Abschnitt der Zugkomponente (35) den ersten feststehenden Rollenblock (31), den beweglichen Rollenblock (33) und den zweiten feststehenden Rollenblock (34) der Reihe nach rückwärts und vorwärts umläuft und ein zweites Ende der Zugkomponente (35) auf dem beweglichen Rollenblock (33) oder dem zweiten feststehenden Rollenblock (34) befestigt ist.

2. Wasserflächen-Photovoltaikvorrichtung nach Anspruch 1, wobei das erste schwimmende Photovoltaikmodul (1) eine oder mehrere erste Solarenergie-Erzeugungseinheiten (111) umfasst, die aus einem ersten Schwimmkasten (11) und einem ersten Photovoltaikpanel (12), das auf dem ersten Schwimmkasten (11) verlegt ist, bestehen; und/oder wobei das zweite schwimmende Photovoltaikmodul (2) eine oder mehrere zweite Solarenergie-Erzeugungsgruppen umfasst, die aus einem zweiten Schwimmkasten (21) und einem zweiten Photovoltaikpanel (22), das auf dem zweiten Schwimmkasten (21) verlegt ist, bestehen.

3. Wasserflächen-Photovoltaikvorrichtung nach Anspruch 2, wobei die mehreren ersten Solarenergie-Erzeugungseinheiten (111) der Reihe nach in der Richtung von der ersten Kante zur zweiten Kante angeordnet sind und gelenkig miteinander verbunden sind und eine oder mehrere Gruppen von Teleskopverbindungen (13) zwischen den ersten Solarenergie-Erzeugungseinheiten (111) verbunden sind, wobei die eine oder die mehreren Gruppen von Teleskopverbindungen (13) alle über einem höchsten Wasserpegel des Speicherbeckens (200) angeordnet sind.

4. Wasserflächen-Photovoltaikvorrichtung nach einem der Ansprüche 1 bis 3, wobei das erste schwimmende Photovoltaikmodul (1) und das zweite schwimmende Photovoltaikmodul (2) rechtwinklig, kreisförmig oder unregelmäßig geformt sind.

5. Wasserflächen-Photovoltaikvorrichtung nach einem der Ansprüche 2 bis 3, wobei der erste Schwimmkasten (11) ferner mit mindestens einer Reihe einer Aufstiegsleiter (14) jeweils auf zwei Seiten des ersten Photovoltaikpanels (12) versehen ist, ein eingeschlossener Winkel zwischen einer Trittfläche jeder Reihe der Aufstiegsleiter (14) und einer Achse der Schwimmtrommel unterschiedlich ist und auf der Teleskopverbindung (13), die an jedem ersten Schwimmkasten (11) installiert und angelenkt ist, ebenfalls eine Aufstiegsleiter (14) mit einem Winkel, der zu der Trittstufe der Aufstiegsleiter (14) des ersten Schwimmkastens (11) passt, angeordnet ist.

6. Wasserflächen-Photovoltaikvorrichtung nach einem der Ansprüche 2 bis 3, wobei zwischen einer Fläche des ersten Photovoltaikpanels (12) und dem ersten Schwimmkasten (11) ein erster eingeschlossener Winkel vorhanden ist und zwischen einer Fläche des zweiten Photovoltaikpanels (22) und dem zweiten Schwimmkasten (21) ein zweiter eingeschlossener Winkel vorhanden ist.

7. Wasserflächen-Photovoltaikvorrichtung nach Anspruch 6, wobei der erste eingeschlossene Winkel als θ1 definiert ist und 3‰ ≤ θ1 ≤ 10%; und
der zweite eingeschlossene Winkel als θ2 definiert ist und 3‰ ≤ θ2 ≤ 10%.

8. Wasserflächen-Photovoltaikvorrichtung nach einem der Ansprüche 1 bis 3, wobei der erste feststehende Rollenblock (31) an einem oberen Ende der Führungsschiene (4) feststehend angeordnet ist, die geneigte Fläche des Speicherbeckens (200) mit einem Ankerpunkt (7) und einem Winkel versehen ist und die Führungsschiene (4) durch den Ankerpunkt (7) und den Winkel auf der geneigten Fläche des Speicherbeckens (200) befestigt ist.

9. Wasserflächen-Photovoltaikvorrichtung nach Anspruch 8, wobei die Wasserflächen-Photovoltaikvorrichtung ferner einen Spannmechanismus umfasst, der ausgelegt ist, auf dem Winkel angeordnet zu sein, und ein erstes Ende der Zugkomponente (35) mit dem Spannmechanismus verbunden ist.

10. Wasserflächen-Photovoltaikvorrichtung nach Anspruch 9, wobei der Spannmechanismus Folgendes umfasst:
eine Fangvorrichtung (53), die fest auf die Winde (52) aufgeschoben ist; und
ein Sperrrad (54), das auf dem Winkel angeordnet ist und sich mit der Fangvorrichtung (53) in Eingriff befindet, wobei dann, wenn sich die Fangvorrichtung (53) in einer Richtung des Loslassens der Zugkomponente (35) bewegt, das Sperrrad (54) ausgelegt ist, an der Fangvorrichtung (53) anzuliegen.

11. Wasserflächen-Photovoltaikvorrichtung nach einem der Ansprüche 1 bis 3, die ferner einen Sprühmechanismus umfasst, der ausgelegt ist, Wasser zum ersten schwimmenden Photovoltaikmodul (1) und zum zweiten schwimmenden Photovoltaikmodul (2) zu sprühen.

12. Wasserflächen-Photovoltaikvorrichtung nach Anspruch 11, wobei der Sprühmechanismus Folgendes umfasst:
einen Wasserbehälter (61), der ausgelegt ist, in der Nähe eines höchsten Wasserpegels auf der geneigten Fläche des Speicherbeckens (200)angeordnet zu sein, wobei der Wasserbehälter (61) mit einem Wassereinlass (65) ausgebildet ist;
ein Sperrventil, das am Wassereinlass (65) des Wasserbehälters (61) angeordnet ist und ermöglicht, dass Wasser in den Wasserbehälter (61) fließt;
eine Wasserrohrleitung (62), die mit dem Wasserbehälter (61) in Verbindung steht und sich auf das erste schwimmende Photovoltaikmodul (1) und das zweite schwimmende Photovoltaikmodul (2) erstreckt;
ein Wasserventil (66), das auf der Wasserrohrleitung (62) angeordnet ist und ausgelegt ist, die Wasserrohrleitung (62) zu sperren oder leitend zu schalten;
einen ersten Sprühkopf (63) und einen zweiten Sprühkopf (64), wobei der erste Sprühkopf (63) auf dem ersten schwimmenden Photovoltaikmodul (1) angeordnet ist und mit der Wasserrohrleitung (62) in Verbindung steht und der zweite Sprühkopf (64) auf dem zweiten schwimmenden Photovoltaikmodul (2) angeordnet ist und mit der Wasserrohrleitung (62) in Verbindung steht; und
ein Steuermodul in kommunikationstechnischer Verbindung mit dem Wasserventil (66) und ausgelegt, das Wasserventil (66) zu steuern, während eines arbeitsfreien Nachtzeitraums, wenn der Wasserpegel im Speicherbecken (200) niedriger als ein vorgegebener Wasserpegel ist, leitend geschaltet zu sein.

13. Wasserflächen-Photovoltaikvorrichtung nach einem der Ansprüche 1 bis 3, wobei jede geneigte Fläche des Speicherbeckens (200) gleichmäßig mit dem ersten schwimmenden Photovoltaikmodul (1) versehen ist.

14. Nutzungsverfahren für die Wasserflächen-Photovoltaikvorrichtung nach einem der Ansprüche 1 bis 13, das Folgendes umfasst:
auf der Grundlage einer Steigung jeder geneigten Fläche des Speicherbeckens (200), einer Länge der geneigten Fläche und eines Abstands zwischen den geneigten Flächen Bestimmen eines Verhältniskoeffizienten & der Wiederholungen des Aufwickelns der Zugkomponenten (35) in einem ersten Abschnitt und in einem zweiten Abschnitt, der jeder geneigten Fläche entspricht, der Flächeninhalte, Formen, Abschnittsanzahlen und Abschnittslängen des ersten schwimmenden Photovoltaikmoduls (1) und des zweiten schwimmenden Photovoltaikmoduls (2), der Abschnittsanzahlen der Teleskopverbindungen (13) und einer Abschnittslänge jeder Teleskopverbindung (13);
Konstruieren des Ankerpunktes (7), des Winkels, der Führungsschiene (4) und des Wasserbehälters (61), wenn sich das Speicherbecken (200) in einem Zustand des tiefsten Wasserpegels oder trockenen Landes befindet;
Installieren des zweiten schwimmenden Photovoltaikmoduls (2), was Folgendes umfasst: Installieren des zweiten schwimmenden Photovoltaikmoduls (2), wenn sich das Speicherbecken in einem Zustand des höchsten Wasserpegels befindet, Installieren der zweiten Solarenergie-Erzeugungsgruppe des zweiten schwimmenden Photovoltaikmoduls (2) auf der Wasserfläche unter Verwendung einer Hebevorrichtung, Bewegen des zweiten schwimmenden Photovoltaikmoduls (2) zu einer Mitte des Speicherbeckens (200) nach dem Zusammenbauen und vorübergehendes Befestigen des zweiten schwimmenden Photovoltaikmoduls (2) und des Ankerpunktes (7) auf der geneigten Fläche des Speicherbeckens (200);
Installieren des ersten schwimmenden Photovoltaikmoduls (1), was Folgendes umfasst: Installieren des ersten schwimmenden Photovoltaikmoduls (1) auf der geneigten Fläche entlang der geneigten Fläche des Speicherbeckens (200) in einer Abfolge von unten nach oben unter Verwendung einer Blockinstallationsbetriebsart, wenn sich das erste schwimmende Photovoltaikmodul (1) am höchsten Wasserpegel befindet, Bewirken, dass ein Abschnitt des ersten schwimmenden Photovoltaikmoduls (1) ins Wasser gleitet, so dass er schwimmt, und wobei ein Gelenkpunkt der ersten Kante des ersten schwimmenden Photovoltaikmoduls (1) mit dem zweiten schwimmenden Photovoltaikmodul (2) gelenkig verbunden und befestigt wird, während eine Position des zweiten schwimmenden Photovoltaikmoduls (2) zusammenwirkend reguliert wird;
gelenkiges Verbinden und Befestigen der zweiten Kante des obersten ersten schwimmenden Photovoltaikmoduls (1) mit dem Ankerpunkt; und anschließend Installieren des ersten schwimmenden Photovoltaikmoduls (1) auf der anderen geneigten Fläche unter Verwendung des Verfahrens und gelenkiges Verbinden und Befestigen des ersten schwimmenden Photovoltaikmoduls (1) mit dem zweiten schwimmenden Photovoltaikmodul (2) eines nach dem anderen;
Installieren des Anstiegsanpassungssystems, was Folgendes umfasst: Installieren des ersten feststehenden Rollenblocks (31), des beweglichen Rollenblocks (33), der ersten Schwimmkomponente (32) und des zweiten feststehenden Rollenblocks (34) der Reihe nach in einer Abfolge von unten nach oben, Installieren der Spannvorrichtung, Hindurchführen der Zugkomponente (35) und gelenkiges Verbinden des zweiten feststehenden Rollenblocks (34) mit dem zweiten schwimmenden Photovoltaikmodul (2);
Durchführen von Regulierung und Fehlersuche im Gesamtsystem, was Folgendes umfasst: Durchführen einer Regulierung der gesamten Wasserflächen-Photovoltaikvorrichtung und anschließend Regulieren der Schwankung des Wasserpegels im Speicherbecken und
Durchführen von Fehlersuche und vorläufiger Inbetriebnahme auf der Wasserflächen-Photovoltaikvorrichtung;
Regulieren des Spannvorgangs der Zugkomponente (35) in Verbindung mit einer Betriebssituation der Wasserflächen-Photovoltaikvorrichtung; und
automatisches Reinigen des Photovoltaikpanels gemäß Bedingungen und Zeit, die durch ein Programm eingestellt werden.

15. Nutzungsverfahren nach Anspruch 14, wobei das Bestimmen des Verhältniskoeffizienten & der Wiederholungen des Aufwickelns der Zugkomponenten (35) im ersten Abschnitt und im zweiten Abschnitt, der jeder geneigten Fläche entspricht, Folgendes umfasst: & = L1/L2;
wobei & ein Verhältnis der Anzahl der Zugkomponenten (35) des ersten Abschnitts zur Anzahl der Zugkomponenten (35) des zweiten Abschnitts ist;
L1 die Länge der geneigten Fläche des Speicherbeckens (200) ist; und
L2 eine Differenz des Abstands von einer Wasserlinie an einem Böschungsfuß zur Mitte des Speicherbeckens (200) ist.

## Revendications

1. Dispositif photovoltaïque à la surface de l'eau, comprenant :
un premier module photovoltaïque flottant (1) et un second module photovoltaïque flottant (2), dans lequel deux bords opposés du premier module photovoltaïque flottant (1) sont définis en tant que premier bord et second bord respectivement, le premier bord du premier module photovoltaïque flottant (1) est articulé avec le second module photovoltaïque flottant (2), le second bord est conçu pour être articulé avec une surface inclinée d'un bassin de retenue (200), le premier module photovoltaïque flottant (1) est conçu pour s'étendre et se rétracter dans une direction allant du premier bord au second bord, et le second module photovoltaïque flottant (2) est conçu pour être placé sur une surface d'eau dans le bassin de retenue (200) ; et
un système de réglage de montée (3), comprenant :
un rail de guidage (4) conçu pour être posé sur la surface inclinée du bassin de retenue (200) et s'étendant dans une direction inclinée de la surface inclinée ; et un premier bloc poulie fixe (31) disposé de manière fixe sur le rail de guidage (4) ;
un premier composant flottant (32) conçu pour être disposé dans le bassin de retenue (200) et se déplaçant vers le haut et vers le bas avec un niveau d'eau dans le bassin de retenue (200) ; et un bloc poulie mobile (33) disposé de manière fixe sur le premier composant flottant (32) et relié de manière coulissante au rail de guidage (4) ;
un second bloc poulie fixe (34) relié de manière fixe à un bord du second module photovoltaïque flottant (2) ;
une source de rotation (51) disposée de manière fixe sur la surface inclinée du bassin de retenue (200), dans lequel une extrémité d'entraînement de la source de rotation (51) est pourvue d'une bobine (52) ; et
un composant de traction (35), dans lequel une première extrémité du composant de traction (35) est enroulée autour de la bobine (52) de la source de rotation (51), une partie centrale du composant de traction (35) contourne le premier bloc poulie fixe (31), le bloc poulie mobile (33) et le second bloc poulie fixe (34) dans un mouvement de va-et-vient à tour de rôle, et une seconde extrémité du composant de traction (35) est fixée sur le bloc poulie mobile (33) ou le second bloc poulie fixe (34).

2. Dispositif photovoltaïque à la surface de l'eau selon la revendication 1, dans lequel le premier module photovoltaïque flottant (1) comprend une ou plusieurs premières unités de production d'énergie solaire (111) constituées d'un premier caisson de flottaison (11) et d'un premier panneau photovoltaïque (12) posé sur le premier caisson de flottaison (11) ; et/ou ;
le second module photovoltaïque flottant (2) comprend un ou plusieurs seconds ensembles de production d'énergie solaire constitués d'un second caisson de flottaison (21) et d'un second panneau photovoltaïque (22) posé sur le second caisson de flottaison (21).

3. Dispositif photovoltaïque à la surface de l'eau selon la revendication 2, dans lequel les plusieurs premières unités de production d'énergie solaire (111) sont disposées à tour de rôle dans la direction allant du premier bord au second bord et sont articulées entre elles, et un ou plusieurs ensembles de joints télescopiques (13) sont reliés entre les premières unités de production d'énergie solaire (111), dans lequel le ou les ensembles de joints télescopiques (13) sont tous situés au-dessus du niveau le plus élevé de l'eau du bassin de retenue (200).

4. Dispositif photovoltaïque à la surface de l'eau selon l'une quelconque des revendications 1 à 3, dans lequel le premier module photovoltaïque flottant (1) et le second module photovoltaïque flottant (2) sont rectangulaires, circulaires ou irréguliers.

5. Dispositif photovoltaïque à la surface de l'eau selon l'une quelconque des revendications 2 à 3, dans lequel le premier caisson de flottaison (11) est en outre pourvu d'au moins un échelon d'échelle (14) sur deux côtés du premier panneau photovoltaïque (12) respectivement, un angle inclus entre une marche de chaque échelon de l'échelle (14) et un axe du tambour flottant est différent, et sur le joint télescopique (13) installé et articulé avec chaque premier caisson de flottaison (11), une échelle (14) dont l'angle correspond à celui de la marche de l'échelle (14) du premier caisson de flottaison (11) est également disposée.

6. Dispositif photovoltaïque à la surface de l'eau selon l'une quelconque des revendications 2 à 3, dans lequel il existe un premier angle inclus entre une surface du premier panneau photovoltaïque (12) et le premier caisson de flottaison (11) ; et il existe un second angle inclus entre une surface du second panneau photovoltaïque (22) et le second caisson de flottaison (21).

7. Dispositif photovoltaïque à la surface de l'eau selon la revendication 6, dans lequel le premier angle inclus est défini par θ1, et 3 ‰ ≤ θ1 ≤ 10 % ; et
le second angle inclus est défini par θ2, et 3 ‰ ≤ θ2 ≤ 10 %.

8. Dispositif photovoltaïque à la surface de l'eau selon l'une quelconque des revendications 1 à 3, dans lequel le premier bloc poulie fixe (31) est disposé de manière fixe à une extrémité supérieure du rail de guidage (4), la surface inclinée du bassin de retenue (200) est pourvue d'un point d'ancrage (7) et d'un support, et le rail de guidage (4) est fixé sur la surface inclinée du bassin de retenue (200) par l'intermédiaire du point d'ancrage (7) et du support.

9. Dispositif photovoltaïque à la surface de l'eau selon la revendication 8, dans lequel le dispositif photovoltaïque à la surface de l'eau comprend en outre un mécanisme de tension conçu pour être disposé sur le support, et une première extrémité du composant de traction (35) est reliée au mécanisme de tension.

10. Dispositif photovoltaïque à la surface de l'eau selon la revendication 9, dans lequel le mécanisme de tension comprend :
un engrenage de sécurité (53) manchonné de manière fixe sur la bobine (52) ; et
une roue à rochet (54) disposée sur le support et en prise avec l'engrenage de sécurité (53), dans lequel, lorsque l'engrenage de sécurité (53) se déplace dans le sens de desserrage du composant de traction (35), la roue à rochet (54) est conçue pour venir en butée contre l'engrenage de sécurité (53).

11. Dispositif photovoltaïque à la surface de l'eau selon l'une quelconque des revendications 1 à 3, comprenant en outre un mécanisme de pulvérisation conçu pour pulvériser de l'eau sur le premier module photovoltaïque flottant (1) et le second module photovoltaïque flottant (2).

12. Dispositif photovoltaïque à la surface de l'eau selon la revendication 11, dans lequel le mécanisme de pulvérisation comprend :
une cuve d'eau (61) conçue pour être disposée près du niveau d'eau le plus élevé sur la surface inclinée du bassin de retenue (200), dans lequel la cuve d'eau (61) est pourvue d'une admission d'eau (65) ;
un clapet antiretour disposé au niveau de l'admission d'eau (65) de la cuve d'eau (61) et permettant à l'eau de s'écouler dans la cuve d'eau (61) ;
une conduite d'eau (62) en communication avec la cuve d'eau (61) et s'étendant sur le premier module photovoltaïque flottant (1) et le second module photovoltaïque flottant (2) ;
une vanne d'eau (66) disposée sur la conduite d'eau (62) et conçue pour bloquer ou débloquer la conduite d'eau (62) ;
une première tête de pulvérisation (63) et une seconde tête de pulvérisation (64), dans lequel la première tête de pulvérisation (63) est située sur le premier module photovoltaïque flottant (1) et communique avec la conduite d'eau (62), et la seconde tête de pulvérisation (64) est située sur le second module photovoltaïque flottant (2) et communique avec la conduite d'eau (62) ; et
un module de commande en connexion de communication avec la vanne d'eau (66) et conçu pour commander la vanne d'eau (66) pour la débloquer pendant une période nocturne sans travail lorsque le niveau d'eau dans le bassin de retenue (200) est inférieur à un niveau d'eau prédéfini.

13. Dispositif photovoltaïque à la surface de l'eau selon l'une quelconque des revendications 1 à 3, dans lequel chaque surface inclinée du bassin de retenue (200) est uniformément pourvue du premier module photovoltaïque flottant (1).

14. Procédé d'utilisation du dispositif photovoltaïque à la surface de l'eau selon l'une quelconque des revendications 1 à 13, comprenant :
en fonction de la pente de chaque surface inclinée du bassin de retenue (200), de la longueur de la surface inclinée, et de la distance entre les surfaces inclinées, la détermination d'un coefficient de rapport & dans des temps d'enroulement des composants de traction (35) dans une première section et une seconde section correspondant à chaque surface inclinée, des aires, formes, numéros de section et longueurs de section du premier module photovoltaïque flottant (1) et du second module photovoltaïque flottant (2), des numéros de section des joints télescopiques (13) et une longueur de section de chaque joint télescopique (13) ;
la construction du point d'ancrage (7), du support, du rail de guidage (4) et de la cuve d'eau (61) lorsque le bassin de retenue (200) est au niveau le plus bas de l'eau ou à l'état de terre ferme ;
l'installation du second module photovoltaïque flottant (2), comprenant : l'installation du second module photovoltaïque flottant (2) lorsque le bassin de retenue est à l'état du niveau d'eau le plus élevé, l'installation du second ensemble de production d'énergie solaire du second module photovoltaïque flottant (2) sur la surface de l'eau à l'aide d'un dispositif de levage, le déplacement du second module photovoltaïque flottant (2) vers le centre du bassin de retenue (200) après l'assemblage, et la fixation temporaire du second module photovoltaïque flottant (2) et du point d'ancrage (7) sur la surface inclinée du bassin de retenue (200) ;
l'installation du premier module photovoltaïque flottant (1), comprenant : l'installation du premier module photovoltaïque flottant (1) sur la surface inclinée le long de la surface inclinée du bassin de retenue (200) dans une séquence ascendante en utilisant un mode d'installation par blocs, étant donné que le premier module photovoltaïque flottant (1) se trouve dans le niveau d'eau le plus élevé, une partie du premier module photovoltaïque flottant (1) glissant dans l'eau pour flotter, et un point d'articulation du premier bord du premier module photovoltaïque flottant (1) étant articulé et fixé avec le second module photovoltaïque flottant (2) tandis qu'une position du second module photovoltaïque flottant (2) est régulée en coopération ;
l'articulation et la fixation du second bord du premier module photovoltaïque flottant le plus haut (1) avec le point d'ancrage ; puis l'installation du premier module photovoltaïque flottant (1) sur une autre surface inclinée en utilisant le procédé, et l'articulation et la fixation du premier module photovoltaïque flottant (1) avec le second module photovoltaïque flottant (2), un par un ;
l'installation du système de réglage d'élévation, comprenant : l'installation du premier bloc poulie fixe (31), du bloc poulie mobile (33), du premier composant flottant (32) et du second bloc poulie fixe (34) tour à tour dans une séquence ascendante, l'installation du dispositif de tension, pénétrant dans le composant de traction (35), et la liaison articulée du second bloc poulie fixe (34) au second module photovoltaïque flottant (2) ;
la réalisation d'une régulation globale et d'un débogage, comprenant : la réalisation d'une régulation globale du dispositif photovoltaïque à la surface de l'eau, puis la régulation de fluctuations du niveau de l'eau dans le bassin de retenue, et la réalisation du débogage et de la pré-exploitation sur le dispositif photovoltaïque à la surface de l'eau ;
la régulation de la mise en tension du composant de traction (35) en association avec une situation de fonctionnement du dispositif photovoltaïque à la surface de l'eau ; et
le nettoyage automatique du panneau photovoltaïque en fonction de conditions et d'une heure définies par un programme.

15. Procédé d'utilisation selon la revendication 14, dans lequel la détermination du coefficient de rapport & de temps d'enroulement des composants de traction (35) dans la première section et la seconde section correspondant à chaque surface inclinée comprend : *&* = L1/L2 ;
dans lequel, & est un rapport entre le nombre de la première section des composants de traction (35) et le nombre de la seconde section des composants de traction (35) ;
L1 est la longueur de la surface inclinée du bassin de retenue (200) ; et
L2 est la différence de distance entre une ligne de flottaison au niveau d'un pied de pente et le centre du bassin de retenue (200).
